# EUROPÄISCHE PATENTSCHRIFT

(11) **EP 3 941 778 B1**
(45) Veröffentlichungstag und Bekanntmachung des Hinweises auf die Patenterteilung: **17.08.2022**
(21) Anmeldenummer: 20720404.1
(22) Anmeldetag: 16.04.2020
(51) Int. Cl.: B60L 50/71, H01M 8/00

(54) **MODULARES RANGE-EXTENDER-SYSTEM FÜR EIN ELEKTRISCH ANGETRIEBENES KRAFTFAHRZEUG UND ELEKTRISCH ANGETRIEBENES KRAFTFAHRZEUG MIT EINEM RANGE-EXTENDER**
MODULAR RANGE EXTENDER SYSTEM FOR AN ELECTRICALLY DRIVEN MOTOR VEHICLE, AND ELECTRICALLY DRIVEN MOTOR VEHICLE HAVING A RANGE EXTENDER
SYSTÈME PROLONGATEUR D'AUTONOMIE MODULAIRE POUR UN VÉHICULE À MOTEUR À PROPULSION ÉLECTRIQUE ET VÉHICULE À MOTEUR À PROPULSION ÉLECTRIQUE ÉQUIPÉ D'UN PROLONGATEUR D'AUTONOMIE

(30) Priorität: 18.04.2019 DE 102019110317
(43) Veröffentlichungstag der Anmeldung: 26.01.2022
(73) Patentinhaber: STACK Hydrogen Solutions GmbH, 52074 Aachen (DE)
(72) Erfinder: DANY, Stefan, 40476 Düsseldorf (DE); PROTE, Jan-Philipp, 52062 Aachen (DE); SCHNEIDER, Waldemar, 73732 Esslingen (DE)
(74) Vertreter: Nußbaum, Christopher
(86) Internationale Anmeldenummer: PCT/EP2020/060718
(87) Internationale Veröffentlichungsnummer: WO 2020/212498

(56) Entgegenhaltungen:
- WO-A1-2019/083432
- DE-A1- 10 314 360

## Beschreibung

Die vorliegende Erfindung betrifft ein modulares Range-Extender-System für ein elektrisch angetriebenes Kraftfahrzeug, eine Schaltungsanordnung für ein Bordnetz eines elektrisch angetriebenen Kraftfahrzeugs mit einer vorgegebenen Variante eines Range-Extenders des modularen Range-Extender-Systems sowie ein elektrisch angetriebenes Kraftfahrzeug mit einer derartigen Schaltungsanordnung.

Elektrisch angetriebene Kraftfahrzeuge weisen aufgrund der momentan gegebenen Energiedichte von Hochvoltbatterien oftmals noch eine relativ begrenzte Reichweite auf. Zur Reichweitenverlängerung ist es an sich bekannt, sogenannte Range-Extender in Elektrofahrzeugen zu verwenden, um die Reichweite zu erhöhen. Die zurzeit am häufigsten eingesetzten Range-Extender weisen Verbrennungsmotoren auf, die einen Generator antreiben, der wiederum die Hochvoltbatterie und/oder die elektrische Antriebsmaschine Elektromotor mit Strom versorgt.

Darüber hinaus sind auch Range-Extender bekannt, die eine Vielzahl von Brennstoffzellen aufweisen. Ein Vorteil dieser Range-Extender liegt darin, dass diese quasi emissionsfrei sind, da üblicherweise Wasserstoff und Sauerstoff zu Wasser reagieren. Normalerweise erfordern solche auf Brennstoffzellen basierende Range-Extender einen oder mehrere Verdichter, um den Brennstoffzellen verdichtete Luft zuzuführen. Die Verdichter müssen relativ aufwendig an den jeweiligen Range-Extender angepasst werden. Darüber hinaus ist die elektrische Verschaltung solcher auf Brennstoffzellen basierender Range-Extender mit einer Hochvoltbatterie relativ kostenaufwendig.

Brennstoffzellen zur Energieversorgung bei Fahrzeugen zu verwenden ist an sich bekannt. So zeigt beispielsweise die DE 103 14 360 A1 eine Spannungsversorgung für ein Fahrzeug, bei der zwei Spanungskreise mit unterschiedlichen Spannungsniveaus geschaltet sind. Als Energiequelle dient ein Brennstoffzellen-Stack aus in Serie geschalteten Brennstoffzellenelementen. Zur Bereitstellung der beiden Spannungskreise mit den unterschiedlichen Spannungsniveaus sind drei Abgriffspole am Brennstoffzellen-Stack vorgehsehen: einer bei 14V, der zweite bei 42V und der dritte bildet die Masse.

Es ist daher die Aufgabe der vorliegenden Erfindung, eine Lösung bereitzustellen, mittels welcher auf Brennstoffzellen basierende Range-Extender besonders einfach an unterschiedliche Randbedingungen angepasst werden können.

Diese Aufgabe wird durch die Gegenstände der unabhängigen Ansprüche gelöst. Weitere mögliche Ausgestaltungen der Erfindung sind in den abhängigen Ansprüchen angegeben.

Das erfindungsgemäße modulare Range-Extender-System für ein elektrisch angetriebenes Kraftfahrzeug umfasst mehrere Brennstoffzellen-Grundmodule, die jeweils mehrere in Reihe geschaltete Brennstoffzellen und Schnittstellen zum Zuführen von Wasserstoff und Luft sowie zum Abführen von Wasser und Restgas aufweisen. Des Weiteren umfasst das modulare Range-Extender-System eine Medienversorgungseinrichtung, welche dazu ausgelegt ist, Luft und Wasserstoff über die Schnittstellen den Brennstoffzellen-Grundmodulen zuzuführen und Wasser sowie Restgas über die Schnittstellen aus den Brennstoffzellen-Grundmodulen abzuführen. Zur Bereitstellung verschiedener Leistungen und/oder Spannungen sind unterschiedliche Anzahlen der Brennstoffzellen-Grundmodule in unterschiedlichen Reihen- und/oder Parallelschaltungen elektrisch miteinander verbindbar sowie mit der Medienversorgungseinrichtung zu jeweiligen Varianten eines Range-Extenders konfigurierbar.

Wesentlich bei dem modularen Range-Extender-System ist, dass die einzelnen Brennstoffzellen-Grundmodule durch eine entsprechende Kombination beliebig für jeden Anwendungsfall zu einem Gesamtsystem, also einer bestimmten Variante eines Rangs-Extenders, skalierbar sind. Durch entsprechende Parallelschaltung und Reihenschaltung der einzelnen Brennstoffzellen-Grundmodule können verschiedene Varianten eines Range-Extenders konfiguriert werden, die sich beispielsweise im Hinblick auf die bereitstellbare Leistung unterscheiden, aber zum Beispiel die gleiche Hochvoltspannung bereitstellen können. Natürlich ist es auch möglich, dass die Brennstoffzellen-Grundmodule so miteinander verschaltet werden, dass bei unterschiedlichen Varianten des Range-Extenders die bereitstellbaren Spannungen sich unterscheiden.

Zu den Brennstoffzellen-Grundmodulen können darüber hinaus noch verschiedenste Peripherie- und Systemkomponenten gehören, die für eine in hohem Maße eigenständige Funktion der jeweiligen Brennstoffzellen-Grundmodule in diese integriert sind. Insbesondere ist es möglich, bei einer entsprechend an eine jeweilige Randbedingung angepassten Konfiguration des modularen Range-Extender-Systems eine besonders hohe Lebensdauer und Effizienz bei der betreffenden Variante des Range-Extenders zu erzielen. Dies ist unter anderem dadurch möglich, dass eine an die Randbedingung angepasste Auslegung mit definierten Betriebspunkten der betreffenden Variante des Range-Extenders erzielt werden kann. Insbesondere ist es auch möglich, die jeweiligen Varianten des Range-Extenders auf einen Teillastbereich hin auszulegen.

Insbesondere ist es mittels des erfindungsgemäßen modularen Range-Extender-Systems möglich, auf Basis von den relativ kostengünstig herstellbaren Brennstoffzellen-Grundmodulen an jeweilige Randbedingungen angepasste Varianten eines Range-Extenders zu konfigurieren. So ist es möglich, verschiedene Varianten von Range-Extendern auf Basis der Brennstoffzellen-Grundmodule zu konfigurieren und aufzubauen, welche sich hinsichtlich ihrer Leistung und Spannungslage quasi beliebig unterscheiden können.

Die einzelnen Brennstoffzellen-Grundmodule können beispielsweise eine reaktive Fläche von ca. 100 cm² und ca. 80 Brennstoffzellen aufweisen. Natürlich ist es auch möglich, die Anzahl und Fläche der Bipolarplatten sowie die Anzahl der Brennstoffzellen anders zu gestalten. Die je Brennstoffzellen-Grundmodul in Reihe geschalteten Brennstoffzellen können beispielsweise eine Leerlaufspannung von 80 V und eine Spannung von 48 V im Volllastbetrieb bereitstellen. Je nach Auslegung der Brennstoffzellen-Grundmodule sind aber auch andere Leerlaufspannungen und andere Betriebspunkte möglich.

Mittels des modularen Range-Extender-Systems ist es beispielsweise möglich, ganz unterschiedliche Varianten eines auf Brennstoffzellen basierenden Range-Extenders für ganz verschiedene Fahrzeugtypen zu konfigurieren. So kann beispielsweise eine besonders leistungsstarke Variante eines Range-Extenders für ein elektrisch angeriebenes Nutzfahrzeug bereitgestellt werden, genauso ist es möglich, beispielsweise eine weniger leistungsstarke Variante eines Range-Extenders für einen elektrische angetriebenen Kleinwagen basierend auf den gleichen Brennstoffzellen-Grundmodulen zu konfigurieren. Die einzelnen Brennstoffzellen-Grundmodule müssen nur einmal entwickelt, getestet und freigegeben werden. Anschließend können die besagten unterschiedlichen Varianten der Range-Extender auf Basis der vorzugsweise standardisierten Brennstoffzellen-Grundmodule konfiguriert werden.

Insbesondere ist es auf Basis des modularen Range-Extender-Systems möglich, für eine bestimmtes Elektrofahrzeug einen Range-Extender auf Brennstoffzellenbasis zu konfigurieren, der ohne eine Zwischenschaltung eines Gleichspannungswandlers parallel zu einer Hochvoltbatterie des Elektrofahrzeugs geschaltet werden kann. Die üblicherweise ziemlich kostenintensive Gleichspannungswandler kann also entfallen. Denn die Spannungslage des entsprechend konfigurierten Range-Extenders auf Basis des modularen Range-Extender-Systems kann ganz einfach die Spannungslage der betreffenden Hochvoltbatterie angepasst werden, indem einfach die einzelnen Brennstoffzellen-Grundmodulen passend in Reihen- und Parallelschaltungen miteinander verbunden werden.

Eine mögliche Ausführungsform der Erfindung sieht vor, dass die Brennstoffzellen-Grundmodule bezüglich ihrer Komponenten alle den gleichen Aufbau aufweisen. Insbesondere ist es auch möglich, dass die Brennstoffzellen-Grundmodule alle die gleichen Abmessungen aufweisen. Die Brennstoffzellen-Grundmodule können so in hohen Stückzahlen besonders kostengünstig hergestellt werden, da diese alle aus den gleichen vorzugsweise standardisierten Komponenten bestehen.

Eine weitere mögliche Ausführungsform der Erfindung sieht vor, dass die Brennstoffzellen-Grundmodule eine eigene Steuerung aufweisen, wobei diese auf einer gemeinsamen Hardware einer jeweiligen Variante des Range-Extenders ausführbar ist. Darunter ist insbesondere zu verstehen, dass eine Software der Steuerung nicht unbedingt auf einer dem jeweiligen Brennstoffzellen-Grundmodul zugeordneten Hardware laufen muss, sondern auch als Software, beispielsweise als Unterprogramm innerhalb einer Hauptsteuerung, auf einem Steuergerät des Range-Extenders laufen kann. Das bringt den Vorteil, dass man sich nicht darauf einschränkt, dass jedes Brennstoffzellen-Grundmodul die entsprechende Steuerungshardware vorhalten muss. Die besagte eigene Steuerung kann also als Software verstanden werden. Die Brennstoffzellen-Grundmodule können dadurch sehr einfach untereinander, beispielsweise im Störfall gegen Ersatzmodule, also andere bislang nicht verbaute Brennstoffzellen-Grundmodule, ausgetauscht werden. Dazu müssen die Steuerung, Sensorik und/oder Software zur Steuerung eines Brennstoffzellen-Grundmodus - oder auch eine Software des übergeordneten Gesamtsystems, also der betreffenden Range-Extender-Variante - nicht verändert oder angepasst werden.

Eine weitere mögliche Ausführungsform der Erfindung sieht vor, dass die Brennstoffzellen-Grundmodule dazu ausgelegt sind, jeweils eine Leistung im Bereich von 2 bis 8 kW bereitzustellen. Je nach Eigenschaften der in den Brennstoffzellen-Grundmodulen verbauten Membran-Elektrodeneinheiten kann die Leistung bei gleicher reaktiver Fläche der Brennstoffzellen-Grundmodule unterschiedlich ausfallen. Es ist anzustreben, dass alle Brennstoffzellen-Grundmodule zumindest im Wesentlichen genau die gleiche Leistung bereitstellen. Dadurch ist die Skalierung bzw. Konfiguration verschiedener Varianten des Range-Extenders auf Basis der einzelnen Brennstoffzellen-Grundmodule besonders einfach, da sie eben zumindest im Wesentlichen die gleiche Leistung bereitstellen. Vorzugsweise weisen die Brennstoffzellen-Grundmodule auch alle die gleiche Spannung auf.

Gemäß einer weiteren möglichen Ausführungsform der Erfindung ist es vorgesehen, dass die Medienversorgungseinrichtung für jedes Brennstoffzellen-Grundmodul einen separaten Luftverdichter zum Bereitstellen von Luft aufweist. Insbesondere wenn die Brennstoffzellen-Grundmodule alle gleich ausgebildet sind bzw. alle den gleichen Aufbau aufweisen, können auch für alle Brennstoffzellen-Grundmodule genau die gleichen Luftverdichter verwendet werden. Unabhängig davon ist es insbesondere möglich, passend für die jeweiligen Brennstoffzellen-Grundmodule genau den passenden Luftverdichter bereitzustellen, welche auf die Gegebenheiten des jeweiligen Brennstoffzellen-Grundmoduls angepasst ist. Ein Luftverdichtungssystem für eine bestimmte Variante des Range-Extenders kann im Hinblick auf die Luftverdichter so auch besonders einfach konfiguriert und zusammengestellt werden. Denn für eine bestimmte Variante müssen einfach genauso viele Luftverdichter bereitgestellt werden wie Brennstoffzellen-Grundmodule zusammengeschaltet werden. Ein jeweiliges aufwendiges und neues Auslegen einer Luftverdichtungsvorrichtung für unterschiedliche Varianten von Range-Extendern kann also entfallen.

Eine weitere mögliche Ausführungsform der Erfindung sieht vor, dass die Medienversorgungseinrichtung einen zentralen Medienversorgungskanal zum Zuführen von Luft und Wasserstoff sowie zum Abführen von Wasser, Restgas und Luft für die Brennstoffzellen-Grundmodule aufweist, wobei die Brennstoffzellen-Grundmodule links und rechts vom Medienversorgungskanal an diesen ankoppelbar sind. Das Restgas enthält neben Luft unverbrauchten bzw. nicht reagierten Wasserstoff. Durch diesen standardisierten Aufbau können bei ganz unterschiedlichen Konfigurationen der Brennstoffzellen-Grundmodule diese auf einfache Weise einfach mit dem Medienversorgungskanal verbunden werden. Der Medienversorgungskanal weist dafür standardisierte Schnittstellen auf, welche mit ebenfalls standardisierten Schnittstellen der jeweiligen Brennstoffzellen-Grundmodule zusammenwirken können. So ist es ganz einfach möglich, die jeweiligen Brennstoffzellen-Grundmodule links und rechts vom Medienversorgungskanal an diesen anzukoppeln. Das modulare Range-Extender-System kann beispielsweise eine oder auch mehrere Varianten von unterschiedlichen Gehäusen aufweisen, wobei in diese Gehäuse der zentrale Medienversorgungskanal integriert sein kann. Je nach konfigurierter Variante des betreffenden Range-Extenders kann dann die passende Gehäusevariante mit der zugehörigen Medienversorgung ausgewählt werden. Die einzelnen Brennstoffzellen-Grundmodule müssen dann einfach nur an den betreffenden Medienversorgungskanal angeschlossen werden.

Gemäß einer weiteren möglichen Ausführungsform der Erfindung ist es vorgesehen, dass die Grundmodule jeweils eine erste Endplatte und eine zweite Endplatte aufweisen, die an gegenüberliegenden Enden der Brennstoffzellen-Grundmodule angeordnet und zwischen denen die jeweiligen Brennstoffzellen angeordnet sind, wobei ausschließlich die erste Endplatte die Schnittstellen zum Zuführen von Luft und Wasserstoff sowie zum Abführen von Wasser, Restgas und Luft aufweist. Dadurch wird eine besonders kompakte Bauweise bei der betreffenden Variante des konfigurierten Range-Extenders ermöglicht. Zudem können sämtliche Schnittstellen an den jeweiligen Brennstoffzellen-Grundmodulen relativ geringgehalten werden, da diese ausschließlich in die erste Endplatte integriert sind.

Eine weitere mögliche Ausführungsform der Erfindung sieht vor, dass innerhalb der Brennstoffzellen-Grundmodule die Brennstoffzellen in zwei nebeneinander angeordneten und elektrisch in Reihe miteinander verschalteten Zellstapeln positioniert sind, die eine gemeinsame U-förmige Medienführung für Luft, Wasserstoff, Wasser und Restgas aufweisen, wobei die zweite Endplatte je Grundmodul eine Richtungsumleitung für die Medienführung von einem zum anderen Zellstapel aufweist. Durch die beiden nebeneinander angeordneten Zellstapel und die U-förmige Medienführung ergibt sich eine besonders kompakte und flache Bauweise bei den einzelnen Brennstoffzellen-Grundmodulen. Diese kompakte und insbesondere kurze Bauweise verspricht eine relativ gute Robustheit gegenüber mechanischen Belastungen und insbesondere Erschütterungen. Die kurze und kompakte Bauweise ermöglicht auch eine einfachere Fertigung, da sich umso Toleranzen weniger auswirken, je geringer die Anzahl gestapelter Brennstoffzellen und somit je kürzer die Bauweise ist. Zudem lässt sich auch eine hochautomatisierte Produktion der Brennstoffzellen-Grundmodule realisieren.

Die erfindungsgemäße Schaltungsanordnung für ein Bordnetz eines elektrisch angetriebenen Kraftfahrzeugs umfasst eine vorgegebene Variante eines Range-Extenders basierend auf dem erfindungsgemäßen modularen Range-Extender-System oder einer möglichen Ausführungsform des erfindungsgemäßen modularen Range-Extender-Systems, eine Hochvoltbatterie zur Energieversorgung einer elektrischen Antriebsmaschine des Kraftfahrzeugs, wobei die Hochvoltbatterie und der Range-Extender ohne einen Gleichspannungswandler in Form einer Parallelschaltung miteinander verschaltet sind und der Range-Extender dazu ausgelegt ist, die Hochvoltbatterie zu laden. Zudem umfasst die Schaltungsanordnung eine Schalteinrichtung zum Herstellen und Trennen einer elektrisch leitenden Verbindung zwischen dem Range-Extender und der Hochvoltbatterie. Die erfindungsgemäße Schaltungsanordnung bringt insbesondere den Vorteil mit sich, dass ein üblicherweise ansonsten erforderlicher Gleichspannungswandler eingespart werden kann, welcher eine relativ teure Komponente darstellt. Die Variante des Range-Extenders ist dabei so ausgelegt, dass er die Hochvoltbatterie einerseits problemlos laden kann und andererseits so betrieben werden kann, dass beim Aufschalten bzw. Zuschalten des Range-Extenders dieser keinen Schaden nimmt, insbesondere jeweilige Membrane des Range-Extenders nicht beschädigt werden. Bei der besagten Schalteinrichtung kann es sich beispielsweise um ein Mosfet, einen Transistor oder sich auch um ein mechanisches Relais handeln, wobei zudem noch Freilaufdioden als Sicherheitselemente vorgesehen sein können.

Das erfindungsgemäße elektrisch angetriebene Kraftfahrzeug umfasst die erfindungsgemäße Schaltungsanordnung oder eine mögliche Ausführungsform der Schaltungsanordnung.

Eine mögliche Ausführungsform des elektrisch angetriebenen Kraftfahrzeugs sieht vor, dass jeweilige Luftverdichter des Range-Extenders zum Bereitstellen von Luft an die Brennstoffzellen-Grundmodule an anderen Stellen im Kraftfahrzeug als die zugehörigen Brennstoffzellen-Grundmodule angeordnet sind. Somit können also die Luftverdichter zwar den jeweiligen Brennstoffzellen-Grundmodulen zugeordnet sein, müssen allerdings örtlich nicht direkt an den Brennstoffzellen-Grundmodulen angeordnet sein. Im Hinblick auf den vorhandenen Bauraum bzw. die Ausnutzung des vorhandenen Bauraums kann sich das sehr vorteilhaft auswirken. Die jeweiligen Luftverdichter können vereinzelt oder auch in Gruppen zusammengefasst an passenden Stellen im elektrisch angetriebenen Kraftfahrzeug angeordnet werden, und zwar genau dort, wo die Luftverdichter genug Platz haben und möglichst gut Umgebungsluft ansaugen können. Die Brennstoffzellen-Grundmodule wiederum können beispielsweise in einem einzigen Gehäuse zusammengefasst an einer besonders crashgünstigen Stelle im Kraftfahrzeug angeordnet werden, wo sie sich beispielsweise auch noch positiv auf einen niedrigen Schwerpunkt des Kraftfahrzeugs auswirken.

Weitere mögliche Vorteile, Merkmale und Ausgestaltungen der Erfindung werden anhand der nachfolgenden Figuren beschrieben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht eines Brennstoffzellen-Grundmoduls, das mehrere in Reihe geschaltete Brennstoffzellen aufweist und welchem ein Verdichter zum Zuführen von Luft zugeordnet ist;
- Fig. 2: eine schematische Darstellung mehrerer der Brennstoffzellen-Grundmodule, welche in Gruppen zusammengefasst in Reihe geschaltet sind, wobei einige dieser Gruppen wiederum parallel zueinander geschaltet sind;
- Fig. 3: eine schematische Draufsicht auf eine mögliche Variante eines Range-Extenders, welcher auf Basis der einzelnen Brennstoffzellen-Grundmodule konfiguriert wurde;
- Fig. 4: eine Draufsicht auf eines der Brennstoffzellen-Grundmodule, wobei eine U-förmige Medienführung schematisch dargestellt ist;
- Fig. 5: eine stark schematisierte Darstellung einer Schaltungsanordnung für ein Bordnetz eines elektrisch angetriebenen Kraftfahrzeugs welches eine Parallelschaltung einer Variante eines Range-Extenders und einer Hochvoltbatterie umfasst; und in
- Fig. 6: eine schematische Darstellung eines elektrisch angetriebenen Kraftfahrzeugs, welches eine Variante des aus den Brennstoffzellen-Grundmodulen zusammengesetzten Range-Extenders aufweist.

In den Figuren sind gleiche oder funktionsgleiche Elemente mit den gleichen Bezugszeichen versehen worden.

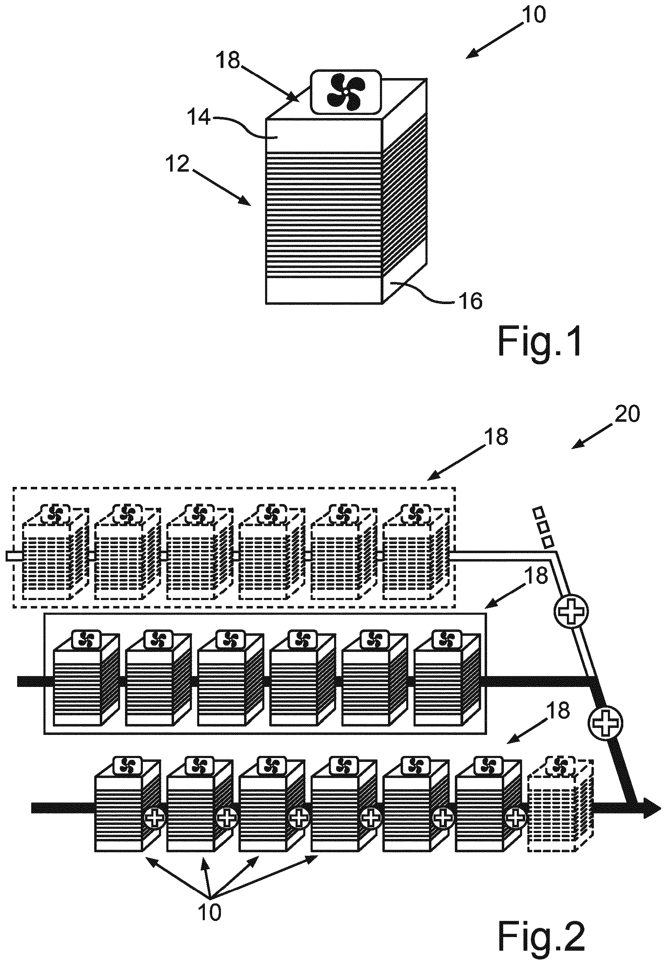

In Fig. 1 ist ein Brennstoffzellen-Grundmodul 10 in einer Perspektivansicht stark schematisiert dargestellt. Das Brennstoffzellen-Grundmodul 10 umfasst einen Stapel 12, auch Stack genannt, von mehreren in Reihe geschalteten und nicht näher bezeichneten Brennstoffzellen. Die Brennstoffzellen umfassen jeweilige Bipolarplatten und jeweilige sogenannte Membran-Elektrodeneinheiten. Das Brennstoffzellen-Grundmodul 10 umfasst zudem eine erste Endplatte 14 und eine zweite Endplatte 16, zwischen denen der Stapel 12 angeordnet ist.

Darüber hinaus umfasst das Brennstoffzellen-Grundmodul 10 mehrere hier nicht dargestellte Schnittstellen zum Zuführen von Wasserstoff und Luft sowie zum Abführen von Wasser und Restgas. Dabei kann es vorgesehen sein, dass ausschließlich die erste Endplatte 14 eine Art Plug-And-Play-Frontend bildet, welches alle Schnittstellen aufweist. Dem Brennstoffzellen-Grundmodul 10 ist zudem noch ein Verdichter 18 zugeordnet, der dazu dient, Luft und somit Sauerstoff zu den einzelnen Brennstoffzellen zu fördern. Entgegen der vorliegenden Darstellung ist es allerdings nicht erforderlich, dass der Verdichter 18 direkt am Brennstoffzellen-Grundmodul 10 angeordnet ist. Stattdessen kann es auch vorgesehen sein, dass der Verdichter 18 an einer ganz anderen Stelle beim Verbau im betreffenden Kraftfahrzeug angeordnet wird als das Brennstoffzellen-Grundmodul 10. Über eine entsprechende Leitung bzw. Verrohrung muss lediglich sichergestellt werden, dass der Verdichter 18 Luft und somit Sauerstoff zum Brennstoffzellen-Grundmodul 10 fördern kann.

In Fig. 2 sind mehrere der Brennstoffzellen-Grundmodule 10 dargestellt. Zur Bereitstellung verschiedener Leistungen und/oder Spannungen können unterschiedliche Anzahlen der Brennstoffzellen-Grundmodule 10 in unterschiedlichen Reihen- und/oder Parallelschaltungen elektrisch miteinander verbunden und mit einer hier nicht dargestellten Medienversorgungseinrichtung zu jeweiligen Varianten eines Range-Extenders konfiguriert werden. Die besagte und hier nicht dargestellte Medienversorgungseinrichtung ist dazu ausgelegt, Luft und Wasserstoff über die erwähnten Schnittstellen der jeweiligen Brennstoffzellen-Grundmodule 10 zuzuführen und Wasser sowie Restgas über die Schnittstellen aus den jeweiligen Brennstoffzellen-Grundmodulen 10 abzuführen.

Vorliegend sind mehrere Gruppen 19 von in Reihe miteinander verschalteten Brennstoffzellen-Grundmodulen 10 schematisch dargestellt. Beispielsweise können je Gruppe 19 so viele der Brennstoffzellen-Grundmodule 10 in Reihe miteinander verschaltet werden, dass diese eine Spannung von beispielsweise 480 V und eine Leistung von 24 kW bereitstellen können. Eine andere Verschaltung ist selbstverständlich ebenfalls möglich. Durch eine Parallelschaltung der einzelnen Gruppen 19 ist es möglich, bei gleichbleibender Spannung die bereitstellbare Leistung zu erhöhen. Grundsätzlich ist eine beliebige Skalierung der Leistung für jeden Anwendungsfall durch eine entsprechende Verschaltung der einzelnen Brennstoffzellen-Grundmodule 10 möglich.

Die einzelnen Brennstoffzellen-Grundmodule 10 können beispielsweise eine reaktive Fläche von ca. 100 cm² und 80 einzelnen Brennstoffzellen aufweisen. Andere Flächen und Anzahlen sind auch möglich. So ist es beispielsweise möglich, dass die jeweiligen Brennstoffzellen-Grundmodule 10 eine Leerlauspannung von 80 V und eine Spannung von 48 V unter Volllast bereitstellen können, wobei die Brennstoffzellen-Grundmodule 10 dazu ausgelegt sein können, beispielsweise eine Leistung im Bereich von 2 bis 8 kW bereitzustellen. Andere Spannungen und Leistungen sind ebenfalls möglich, insbesondere je nach gewählten bzw. verbauten Membran-Elektrodeneinheiten in den einzelnen Brennstoffzellen-Grundmodulen 10.

Vor allem kann es vorgesehen sein, dass die Brennstoffzellen-Grundmodule 10 alle bezüglich ihrer Komponenten den gleichen Aufbau aufweisen. Die Brennstoffzellen-Grundmodule 10 bilden also hochgradig standardisierte Einheiten, in denen überall die gleichen Komponenten verbaut sind. Dadurch lassen sich hohe Skaleneffekte mit entsprechend niedrigen Einkaufs- und Produktionskosten erzielen. Die einzelnen Brennstoffzellen-Grundmodule 10 sowie die erwähnte Medienversorgungseinrichtung bilden gemeinsam also ein modulares Range-Extender-System 20, wobei je nach Randbedingung bzw. Anwendungsfall die standardisierten Brennstoffzellen-Grundmodule 10 in unterschiedlichsten Konfigurationen miteinander verschaltet werden können. Die Brennstoffzellen-Grundmodule 10 können jeweils eine eigene Steuerung aufweisen, wobei diese beispielsweise auf einer gemeinsamen Hardware für eine bestimmte konfigurierte Variante eines Range-Extenders ausgeführt werden können.

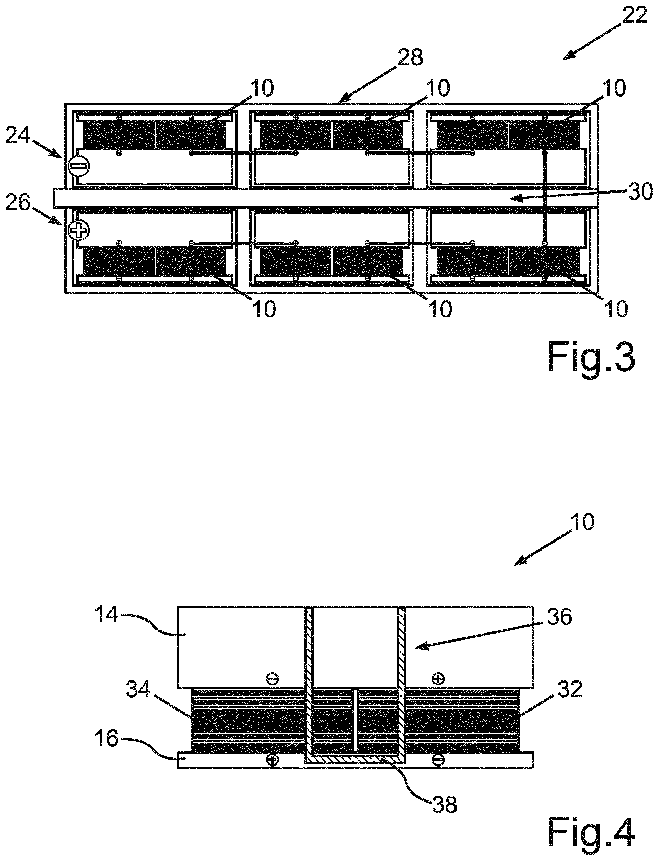

In Fig. 3 ist eine mögliche Variante eines Range-Extenders 22 stark schematisiert in einer Draufsicht gezeigt, welche auf Basis der einzelnen Brennstoffzellen-Grundmodule 10 konfiguriert bzw. zusammengesetzt wurde. Rein beispielhaft wurden die einzelnen Brennstoffzellen-Grundmodule 10 alle in Reihe miteinander verschaltet. Ein Minuspol 24 und ein Pluspol 26 des so konfigurierten Range-Extenders 22 sind schematisch angedeutet. Die jeweiligen Brennstoffzellen-Grundmodule 10 sind in einer Einhausung 28 angeordnet. Die zuvor erwähnte Medienversorgungseinrichtung umfasst einen zentralen Medienversorgungskanal 30 zum Zuführen von Luft und Wasserstoff sowie zum Abführen von Wasser, Restgas und Luft für die jeweiligen Brennstoffzellen-Grundmodule 10. Wie zu erkennen, sind die einzelnen Brennstoffzellen-Grundmodule 10 links und rechts vom Medienversorgungskanal 30 angeordnet und an diesen angekoppelt. Der Medienversorgungskanal 30 umfasst dafür hier nicht näher dargestellte Schnittstellen, welche mit den zuvor bereits erwähnten Schnittstellen der einzelnen Brennstoffzellen-Grundmodule 10 zusammenwirken können.

In Fig. 4 ist eines der im Range-Extender 22 verbauten Brennstoffzellen-Grundmodule 10 in einer Draufsicht schematisch dargestellt. Abweichend von den in den Figuren 1 und 2 gezeigten Ausführungsformen sind innerhalb dieses Brennstoffzellen-Grundmoduls 10 die hier nicht näher gekennzeichneten Brennstoffzellen in zwei nebeneinander angeordneten und elektrisch in Reihe verschalteten Zellstapeln 32, 34 positioniert. Das Brennstoffzellen-Grundmodul 10 umfasst eine nur schematisch angedeutete U-förmige Medienführung 36 für Luft, Wasserstoff, Wasser und Restgas, wobei die zweite Endplatte 16 eine Richtungsumleitung 38 für die Medienführung von einem zum anderen Zellstapel 34 ,32 aufweist. Die erste Endplatte 14 weist wiederum ausschließlich die hier nicht näher dargestellten Schnittstellen zum Zuführen von Luft und Wasserstoff sowie zum Abführen von Wasser und Restgas auf.

Dadurch ergibt sich eine besonders kompakte Bauweise der Brennstoffzellen-Grundmodule 10. Insbesondere kann so eine besonders flache Bauweise und kurze Bauweise bei den auf Basis der so ausgestalteten Brennstoffzellen-Grundmodule 10 konfigurierten Range-Extender 22 erzielt werden.

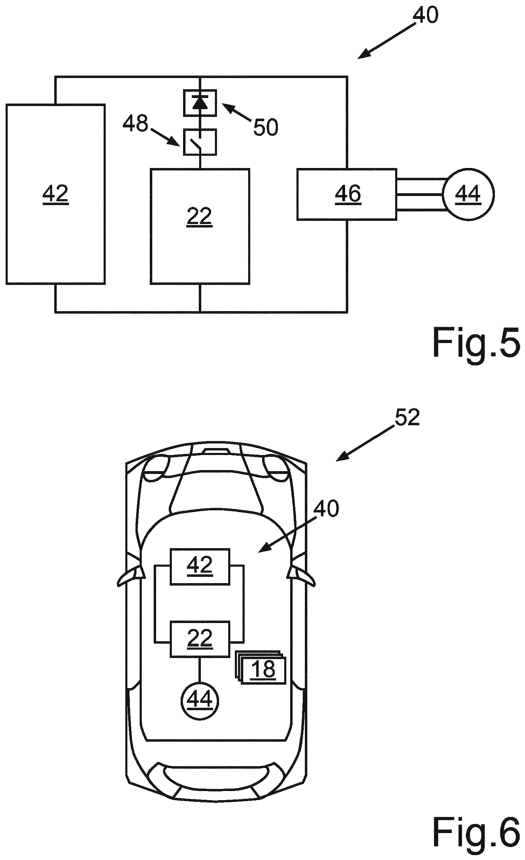

In Fig. 5 ist eine Schaltungsanordnung 40 für ein nicht näher bezeichnetes Bordnetz eines elektrisch angetriebenen Kraftfahrzeugs stark schematisiert dargestellt. Die Schaltungsanordnung 40 umfasst eine vorgegebene Variante eines Range-Extenders 22 basierend auf dem besagten modularen Range-Extender-System 20. Des Weiteren umfasst die Schaltungsanordnung 40 eine Hochvoltbatterie 42 zur Energieversorgung einer elektrischen Antriebsmaschine 44 des betreffenden Kraftfahrzeugs. Ein Frequenzumrichter 46, welcher der elektrischen Antriebsmaschine 44 zugeordnet ist, ist noch schematisch eingezeichnet. Die Hochvoltbatterie 42 und der Range-Extender 22 sind ohne einen Gleichspannungswandler in Form einer Parallelschaltung miteinander verschaltet, wobei der Range-Extender 22 dazu ausgelegt ist, die Hochvoltbatterie 42 zu laden.

Eine Schalteinrichtung 48 zum Herstellen und Trennen einer elektrisch leitenden Verbindung zwischen dem Range-Extender 22 und der Hochvoltbatterie 42 gehört ebenfalls noch zur Schaltungsanordnung 40. Bei der Schalteinrichtung 48 kann es sich beispielsweise um einen Mosfet, einen Transistor oder sich auch um ein mechanisches Relais handeln. Eine oder mehrere Freilaufdioden 50 können ebenfalls noch als Sicherheitselemente vorgesehen sein. Dadurch, dass die Schaltungsanordnung 40 keinen Gleichspannungswandler aufweist, können Bauraum und entsprechende Kosten eingespart werden. Durch eine entsprechend geeignete prädiktive Regelung bzw. Steuerung kann sichergestellt werden, dass beim Zuschalten des Range-Extenders 22 dieser dennoch keinen Schaden nimmt.

In Fig. 6 ist ein elektrisch angetriebenes Kraftfahrzeug 52 stark schematisiert dargestellt. Ein Teil der Schaltungsanordnung 40 ist ebenfalls schematisch eingezeichnet. Mehrere der zuvor erwähnten Luftverdichter 18 sind ebenfalls schematisch eingezeichnet. Die Luftverdichter 18 sind den einzelnen nicht dargestellten Brennstoffzellen-Grundmodulen 10 der betreffenden bzw. konfigurierten Variante des Range-Extenders 22 zugeordnet. Über entsprechende Kanäle bzw. Leitungen können die Luftverdichter 18 angesaugte Luft zu den einzelnen Brennstoffzellen-Grundmodulen 10 befördern. Die Luftverdichter 18 müssen dabei -wie bereits erwähnt - nicht direkt an den Brennstoffzellen-Grundmodulen 10 angeordnet sein. Stattdessen können die Luftverdichter 18 an anderen geeigneten Stellen im Kraftfahrzeug 52 angeordnet werden, insbesondere dort, wo die Platzverhältnisse es besonders gut zulassen und gleichzeitig mittels der Luftverdichter 18 besonders gut Umgebungsluft angesaugt werden kann.

Die einzelnen Brennstoffzellen-Grundmodule 10 können wiederum im Hinblick auf einen günstigen Fahrzeugschwerpunkt und ein günstiges Packaging an anderer Stelle im Kraftfahrzeug 52 angeordnet werden. Die einzelnen Luftverdichter 18 können beispielsweise in Form eines Verdichtermoduls zusammengefasst werden. Je nach Konfiguration des Range-Extenders 22 und vor allem je nach Anzahl der darin verbauten Brennstoffzellen-Grundmodule 10 kann die Anzahl der einzusetzenden Luftverdichter 18 variieren. Die Anzahl der Luftverdichter 18 entspricht dabei genau der Anzahl der Brennstoffzellen-Grundmodule 10.

### BEZUGSZEICHENLISTE

- 10: Brennstoffzellen-Grundmodul
- 12: Stapel aus in Reihe geschalteten Brennstoffzellen
- 14: erste Endplatte
- 16: zweite Endplatte
- 18: Luftverdichter
- 19: in Reihe geschaltete Gruppen von Brennstoffzellen-Grundmodulen
- 20: modulares Range-Extender-System
- 22: Variante eines Range-Extenders
- 24: Minuspol des Range-Extenders
- 26: Pluspol des Range-Extenders
- 28: Einhausung des Range-Extenders
- 30: zentraler Medienversorgungskanal
- 32: Zellstapel
- 34: Zellstapel
- 36: U-förmige Medienführung
- 38: Richtungsumleitung für die Medienführung
- 40: Schaltungsanordnung
- 42: Hochvoltbatterie
- 44: elektrische Antriebsmaschine
- 46: Frequenzumrichter
- 48: Schalteinrichtung
- 50: Freilaufdiode
- 52: Kraftfahrzeug

## Patentansprüche

1. Modulares Range-Extender-System (20) für ein elektrisch angetriebenes Kraftfahrzeug (52), umfassend
- mehrere Brennstoffzellen-Grundmodule (10), die jeweils mehrere in Reihe geschaltete Brennstoffzellen und Schnittstellen zum Zuführen von Wasserstoff und Luft sowie zum Abführen von Wasser und Restgas aufweisen;
- eine Medienversorgungseinrichtung, welche dazu ausgelegt ist, Luft und Wasserstoff über die Schnittstellen den Brennstoffzellen-Grundmodulen (10) zuzuführen und Wasser sowie Restgas über die Schnittstellen aus den Brennstoffzellen-Grundmodulen (10) abzuführen;
- wobei zur Bereitstellung verschiedener Leistungen unterschiedliche Anzahlen der Brennstoffzellen-Grundmodule (10) in unterschiedlichen Parallelschaltungen elektrisch miteinander verbindbar und/oder zur Bereitstellung verschiedener Spannungen unterschiedliche Anzahlen der Brennstoffzellen-Grundmodule (10) in unterschiedlichen Reihenschaltungen elektrisch miteinander verbindbar sowie mit der Medienversorgungseinrichtung zu jeweiligen Varianten eines Range-Extenders (22) konfigurierbar sind.

2. Modulares Range-Extender-System (20) nach Anspruch 1,
**dadurch gekennzeichnet, dass**
die Brennstoffzellen-Grundmodule (10) bezüglich ihrer Komponenten alle den gleichen Aufbau aufweisen.

3. Modulares Range-Extender-System (20) nach Anspruch 1 oder 2,
**dadurch gekennzeichnet, dass**
die Brennstoffzellen-Grundmodule (10) eine eigene Steuerung aufweisen, wobei diese auf einer gemeinsamen Hardware einer jeweiligen Variante des Range-Extenders (22) ausführbar ist.

4. Modulares Range-Extender-System (20) nach einem der vorhergehenden Ansprüche,
**dadurch gekennzeichnet, dass**
die Brennstoffzellen-Grundmodule (10) dazu ausgelegt sind, jeweils eine Leistung im Bereich von 2 bis 8 kW bereitzustellen.

5. Modulares Range-Extender-System (20) nach einem der vorhergehenden Ansprüche,
**dadurch gekennzeichnet, dass**
die Medienversorgungseinrichtung für jedes Brennstoffzellen-Grundmodul (10) einen separaten Luftverdichter (18) zum Bereitstellen von Luft aufweist.

6. Modulares Range-Extender-System (20) nach einem der vorhergehenden Ansprüche,
**dadurch gekennzeichnet, dass**
die Medienversorgungseinrichtung einen zentralen Medienversorgungskanal (30) zum Zuführen von Luft und Wasserwasserstoff sowie zum Abführen von Wasser sowie Restgas für die Brennstoffzellen-Grundmodule (10) aufweist, wobei die Brennstoffzellen-Grundmodule (10) links und rechts vom Medienversorgungskanal (30) an diesen ankoppelbar sind.

7. Modulares Range-Extender-System (20) nach einem der vorhergehenden Ansprüche,
**dadurch gekennzeichnet, dass**
die Brennstoffzellen-Grundmodule (10) jeweils eine erste Endplatte (14) und eine zweite Endplatte (16) aufweisen, die an gegenüberliegenden Enden der Brennstoffzellen-Grundmodule (10) angeordnet und zwischen denen die jeweiligen Brennstoffzellen angeordnet sind, wobei ausschließlich die erste Endplatte (14) die Schnittstellen zum Zuführen von Luft und Wasserwasserstoff sowie zum Abführen von Wasser aufweist.

8. Modulares Range-Extender-System (20) nach Anspruch 7,
**dadurch gekennzeichnet, dass**
innerhalb der Brennstoffzellen-Grundmodule (10) die Brennstoffzellen in zwei nebeneinander angeordneten und elektrisch in Reihe miteinander verschalteten Zellstapeln (32, 34) positioniert sind, die eine gemeinsame U-förmige Medienführung (36) für Luft, Wasserstoff, Wasser und Restgas aufweisen, wobei die zweite Endplatte (16) je Grundmodul eine Richtungsumleitung (38) für die Medienführung (36) von einem zum anderen Zellstapel (32, 34) aufweist.

9. Schaltungsanordnung (40) für ein Bordnetz eines elektrisch angetriebenen Kraftfahrzeugs (52), umfassend
- eine vorgegebene Variante eines Range-Extenders (22) basierend auf einem modularen Range-Extender-System (20) nach einem der vorhergehenden Ansprüche;
- eine Hochvoltbatterie (42) zur Energieversorgung einer elektrischen Antriebsmaschine (44) des Kraftfahrzeugs (52);
- wobei die Hochvoltbatterie (42) und der Range-Extender (22) ohne einen Gleichspannungswandler in Form einer Parallelschaltung miteinander verschaltet sind und der Range-Extender (22) dazu ausgelegt ist, die Hochvoltbatterie (42) zu laden
- eine Schalteinrichtung (48) zum Herstellen und Trennen einer elektrisch leitenden Verbindung zwischen dem Range-Extender (22) und der Hochvoltbatterie (42).

10. Elektrisch angetriebenes Kraftfahrzeug (2), umfassend eine Schaltungsanordnung (40) nach Anspruch 9.

11. Elektrisch angetriebenes Kraftfahrzeug (52) nach Anspruch 10,
**dadurch gekennzeichnet, dass**
jeweilige Luftverdichter (18) des Range-Extenders (22) zum Bereitstellen von Luft für die Brennstoffzellen-Grundmodule (10) an anderen Stellen im Kraftfahrzeug (52) als die zugehörigen Brennstoffzellen-Grundmodule (10) angeordnet sind.

## Claims

1. Modular range extender system (20) for an electrically driven motor vehicle (52), comprising
- a plurality of fuel cell base modules (10), each having a plurality of fuel cells connected in series and interfaces for supplying hydrogen and air and for discharging water and residual gas;
- a media supply device which is configured to supply air and hydrogen to the fuel cell base modules (10) via the interfaces and to discharge water and residual gas from the fuel cell base modules (10) via the interfaces;
- wherein to provide different outputs different numbers of fuel cell base modules (10) in different parallel circuits can be electrically connected to one another and/or to provide different voltages different numbers of fuel cell base modules (10) in different series circuits can be connected to one another electrically and can be configured by the media supply device to form respective variants of a range extender (22).

2. Modular range extender system (20) according to claim 1,
**characterised in that**
the fuel cell base modules (10) all have the same structure with regard to their components.

3. Modular range extender system (20) according to claim 1 or 2,
**characterised in that**
the fuel cell base modules (10) have their own control, whereby this can be executed on a common hardware of a respective variant of the range extender (22).

4. Modular range extender system (20) according to any of the preceding claims, **characterised in that**
the fuel cell base modules (10) are configured to each provide power in the range of 2 to 8 kW.

5. Modular range extender system (20) according to any of the preceding claims, **characterised in that**
the media supply device for each fuel cell base module (10) has a separate air compressor (18) for providing air.

6. Modular range extender system (20) according to any of the preceding claims, **characterised in that**
the media supply device has a central media supply channel (30) for supplying air and hydrogen and for discharging water and residual gas for the fuel cell base modules (10), wherein the fuel cell base modules (10) can be coupled to the left and right of the media supply channel (30).

7. Modular range extender system (20) according to any of the preceding claims, **characterised in that**
the fuel cell base modules (10) each have a first end plate (14) and a second end plate (16) which are arranged at opposite ends of the fuel cell base modules (10) and between which the respective fuel cells are arranged, wherein only the first end plate (14) has the interfaces for supplying air and hydrogen and for discharging water.

8. Modular range extender system (20) according to claim 7,
**characterised in that**
within the fuel cell base modules (10), the fuel cells are positioned in two cell stacks (32, 34) which are arranged next to one another and are electrically connected in series with one another and have a common U-shaped media guide (36) for air, hydrogen and water and residual gas, wherein the second end plate (16) of each base module has a directional diversion (38) for the media guide (36) from one to the other cell stack (32, 34).

9. Circuit arrangement (40) for an on-board electrical system of an electrically driven motor vehicle (52), comprising
- a predetermined variant of a range extender (22) based on a modular range extender system (20) according to any of the preceding claims;
- a high-voltage battery (42) for supplying power to an electric engine (44) of the motor vehicle (52);
- wherein the high-voltage battery (42) and the range extender (22) are connected to one other without a DC voltage converter in the form of a parallel circuit and the range extender (22) is configured to charge the high-voltage battery (42);
- a switching device (48) for making and breaking an electrically conductive connection between the range extender (22) and the high-voltage battery (42).

10. Electrically driven motor vehicle (2) comprising a circuit arrangement (40) according to claim 9.

11. Electrically driven motor vehicle (52) according to claim 10,
**characterised in that**
respective air compressors (18) of the range extender (22) for providing air for the fuel cell base modules (10) are arranged at different locations in the motor vehicle (52) than the associated fuel cell base modules (10).

## Revendications

1. Système prolongateur d'autonomie modulaire (20) pour un véhicule automobile (52) à propulsion électrique, comprenant
- plusieurs modules de base à pile à combustible (10) qui présentent respectivement plusieurs piles à combustible montées en série et interfaces pour l'acheminement d'hydrogène et d'air ainsi que pour l'évacuation d'eau et de gaz résiduel ;
- un dispositif d'alimentation en fluide qui est conçu afin d'acheminer de l'air et de l'hydrogène par le biais des interfaces aux modules de base à pile à combustible (10) et d'évacuer de l'eau ainsi que du gaz résiduel par le biais des interfaces des modules de base à pile à combustible (10) ;
- dans lequel pour la fourniture de différentes puissances, différents nombres de modules de base à pile à combustible (10) peuvent être reliés dans différents circuits parallèles électriquement entre eux et/ou pour la fourniture de différentes tensions, différents nombres de modules de base à pile à combustible (10) peuvent être reliés dans différents circuits en série électriquement entre eux ainsi que sont configurables avec le dispositif d'alimentation en fluide en variantes respectives d'un prolongateur d'autonomie (22).

2. Système prolongateur d'autonomie modulaire (20) selon la revendication 1, **caractérisé en ce que**
les modules de base à pile à combustible (10) présentent tous par référence à leurs composants la même structure.

3. Système prolongateur d'autonomie modulaire (20) selon la revendication 1 ou 2, **caractérisé en ce que**
les modules de base à pile à combustible (10) présentent une propre commande, dans lequel celle-ci peut être réalisée sur un matériel commun d'une variante respective du prolongateur d'autonomie (22).

4. Système prolongateur d'autonomie modulaire (20) selon l'une quelconque des revendications précédentes,
**caractérisé en ce que**
les modules de base à pile à combustible (10) sont conçus afin de fournir respectivement une puissance dans l'étendue de 2 à 8 kW.

5. Système prolongateur d'autonomie modulaire (20) selon l'une quelconque des revendications précédentes,
**caractérisé en ce que**
le dispositif d'alimentation en fluide pour chaque module de base à pile à combustible (10) présente un compresseur d'air (18) séparé pour la fourniture d'air.

6. Système prolongateur d'autonomie modulaire (20) selon l'une quelconque des revendications précédentes,
**caractérisé en ce que**
le dispositif d'alimentation en fluide présente un canal d'alimentation en fluide (30) central pour l'acheminement d'air et d'hydrogène ainsi que pour l'évacuation d'eau ainsi que de gaz résiduel pour les modules de base à pile à combustible (10), dans lequel les modules de base à pile à combustible (10) peuvent être couplés à gauche et droite du canal d'alimentation en fluide (30) à celui-ci.

7. Système prolongateur d'autonomie modulaire (20) selon l'une quelconque des revendications précédentes,
**caractérisé en ce que**
les modules de base à pile à combustible (10) présentent respectivement une première plaque d'extrémité (14) et une seconde plaque d'extrémité (16) qui sont agencées aux extrémités opposées des modules de base à pile à combustible (10) et entre lesquelles les piles à combustible respectives sont agencées, dans lequel exclusivement la première plaque d'extrémité (14) présente les interfaces pour l'acheminement d'air et d'hydrogène ainsi que pour l'évacuation d'eau.

8. Système prolongateur d'autonomie modulaire (20) selon la revendication 7, **caractérisé en ce que**
à l'intérieur des modules de base à pile à combustible (10), les piles à combustible sont positionnées dans deux empilements de pile (32, 34) montés électriquement en série entre eux et agencés l'un à côté de l'autre, lesquels présentent un guidage de fluide (36) commun en forme de U pour de l'air, de l'hydrogène, de l'eau et du gaz résiduel, dans lequel la seconde plaque d'extrémité (16) présente par module de base une déviation de direction (38) pour le guidage de fluide (36) d'un empilement de pile à l'autre (32, 34).

9. Agencement de circuit (40) pour un réseau de bord d'un véhicule automobile (52) à propulsion électrique, comprenant
- une variante prédéfinie d'un prolongateur d'autonomie (22) sur la base d'un système prolongateur d'autonomie (20) modulaire selon l'une quelconque des revendications précédentes ;
- une batterie haute tension (42) pour l'alimentation en énergie d'une machine d'entraînement (44) électrique du véhicule automobile (52) ;
- dans lequel la batterie haute tension (42) et le prolongateur d'autonomie (22) sont montés entre eux sans un convertisseur continu-continu sous la forme d'un circuit parallèle et le prolongateur d'autonomie (22) est conçu afin de charger la batterie haute tension (42)
- un dispositif de commutation (48) pour l'établissement et la séparation d'une liaison électroconductrice entre le prolongateur d'autonomie (22) et la batterie haute tension (42).

10. Véhicule automobile (2) à propulsion électrique comprenant un agencement de circuit (40) selon la revendication 9.

11. Véhicule automobile (52) à propulsion électrique selon la revendication 10, **caractérisé en ce que**
des compresseurs d'air (18) respectifs du prolongateur d'autonomie (22) sont agencés pour la fourniture d'air pour les modules de base à pile à combustible (10) à d'autres endroits dans le véhicule automobile (52) que les modules de base à pile à combustible (10) afférents.
